# EUROPÄISCHE PATENTANMELDUNG

(11) **EP 3 121 927 A1**
(43) Veröffentlichungstag der Anmeldung: **25.01.2017**
(21) Anmeldenummer: 16178771.8
(22) Anmeldetag: 11.07.2016
(51) Int. Cl.: H02J 7/00, H05B 33/08

(54) **SCHALTUNGSANORDNUNG UND VERFAHREN ZUR SIGNALISIERUNG EINES NIEDRIGSPANNUNGSZUSTANDES**

(30) Priorität: 21.07.2015 DE 102015111782
(71) Anmelder: Trelock GmbH, 48149 Münster (DE)
(72) Erfinder: Zander, Michael, 48147 Münster (DE); Wewer, Franz-Josef, 48291 Telgte (DE)
(74) Vertreter: Hentrich Patentanwälte PartG mbB

(57) **Zusammenfassung**

Die Erfindung betrifft eine Schaltungsanordnung für eine Beleuchtungseinrichtung mit einer Halbleiterlichtquelle (1), die bei Anlegen zumindest einer Vorwärtsspannung Licht emittiert und die eine Anode (2) aufweist, welche an einem Ausgang (3) eines Gleichspannungswandlers angeschlossen ist, durch den eine Eingangsspannung in eine Ausgangsspannung transformierbar ist. Der Gleichspannungswandler ist als ein Tiefsetzsteller (4) gebildet, wobei der Halbleiterlichtquelle (1) ein Spannungsspeicher (5) parallel geschaltet ist zur Bereitstellung einer Schaltspannung an einem Schaltelement (6), welches verstellbar ist zwischen einer Durchlasskonfiguration, in der der Spannungsspeicher (5) eine Durchlassspannung an dem Schaltelement (6) bereitstellt wodurch eine Signalquelle (7) aktiviert ist, sowie einer Sperrkonfiguration, in der der Spannungsspeicher (5) keine oder eine die Durchlassspannung unterschreitende Spannung an dem Schaltelement (6) bereitsstellt wodurch die Signalquelle (7) inaktiv ist, und wobei der Tiefsetzsteller (4) im Falle einer die Vorwärtsspannung übersteigenden Eingangsspannung ausgestaltet ist, das Potential an seinem Ausgang (3) zeitweise derart herabzusetzen, dass die Spannung des Spannungsspeichers (5) unterhalb der Durchlassspannung gehalten ist. Ferner betrifft die Erfindung eine Beleuchtungseinrichtung und ein Verfahren zur Signalisierung eines Niedrigspannungszustandes.

## Beschreibung

Die Erfindung betrifft eine Schaltungsanordnung für eine Beleuchtungseinrichtung mit einer Halbleiterlichtquelle, die bei Anlegen zumindest einer Vorwärtsspannung Licht emittiert und die eine Anode aufweist, welche an einem Ausgang eines Gleichspannungswandlers angeschlossen ist, durch den eine Eingangsspannung in eine Ausgangsspannung transformierbar ist. Weiterhin betrifft die Erfindung eine Beleuchtungseinrichtung sowie Verfahren zur Signalisierung eines Niedrigspannungszustandes.

Beleuchtungseinrichtungen mit Halbleiterlichtquellen werden bei Fahrzeugen, insbesondere bei Fahrrädern eingesetzt. Bei Fahrradleuchten, die mit einem Akkumulator oder einer Batterie betrieben werden ist dabei sicherzustellen, dass diese stets über eine ausreichende Energieversorgung verfügen und nicht plötzlich und unerwartet erlöschen.

Eine Schaltungsanordnung der eingangs genannten Art ist beispielsweise aus der DE 10 2013 210 641 A1 bekannt, wobei hier der Gleichspannungswandler als ein Aufwärtswandler, bzw. Boost-Converter oder Hochsetzsteller gebildet ist, dessen Eingangsspannung stets niedriger als dessen Ausgangsspannung ist. Der in dieser Druckschrift beschriebene Gegenstand betrifft ein Verfahren zum Einstellen einer Stromstärke zum Betreiben der Halbleiterlichtquelle der Beleuchtungseinrichtung.

Es ist die Aufgabe der vorliegenden Erfindung, eine Schaltungsanordnung für eine Beleuchtungseinrichtung derart weiterzubilden, dass deren Benutzer über das Erreichen einer Mindestleuchtstärke informiert ist. Ferner ist es Aufgabe der vorliegenden Erfindung eine Beleuchtungseinrichtung sowie ein Verfahren zur Signalisierung eines Niedrigspannungszustandes anzugeben.

Die die Schaltungsanordnung betreffende Aufgabe wird durch eine Schaltungsanordnung mit den Merkmalen gemäßt Patentanspruch 1 gelöst. Hierbei ist der Gleichspannungswandler als ein Tiefsetzsteller gebildet, welcher gewährleistet, dass seine Ausgangsspannung stets kleiner als oder gleich seiner Eingangsspannung ist. Der Halbleiterlichtquelle ist ein Spannungsspeicher parallel geschaltet. Dieser Spannungsspeicher kann eine Schaltspannung an einem Schaltelement bereitstellen, wodurch das Schaltelement zwischen einer Durchlasskonfiguration und einer Sperrfiguration verstellbar ist. In der Durchlasskonfiguration stellt der Spannungsspeicher eine Durchlassspannung am Schaltelement bereit, wodurch eine Signalquelle aktiviert ist. In der Sperrkonfiguration stellt der Spannungsspeicher am Schaltelement keine oder eine die Durchlassspannung unterschreitende Spannung bereit, wodurch die Signalquelle inaktiv ist. Sofern die Eingangsspannung die Vorwärtsspannung übersteigt, ist der Tiefsetzsteller derart ausgestaltet, dass er das Potential an seinem Ausgang zeitweise derart herabsetzt, dass die Spannung des Spannungsspeichers unterhalb der Durchlassspannung gehalten ist.

In einer bevorzugten Ausführungsform ist der Spannungsspeicher als ein Kondensator gebildet zur Bereitstellung einer die Schaltspannung bildenden Basis-Emitter-Spannung an einem als Schaltelement gebildeten Transistor. Übersteigt die vom Kondensator bereitgestellte Basis-Emitter-Spannung die Durchlassspannung, so ist der Transistor in der Durchlasskonfiguration und die Signalquelle aktiviert. Unterschreitet die vom Kondensator bereitgestellte Basis-Emitter-Spannung die Durchlassspannung, so ist der Transistor in der Sperrkonfiguration und die Signalquelle inaktiv.

Durch diese Ausgestaltung einer Schaltungsanordnung ist gewährleistet, dass im Falle eines Absinkens der Eingangsspannung auf oder unter die Vorwärtsspannung der Halbleiterlichtquelle eine Signalquelle aktiviert wird, nämlich durch Bereitstellen einer der Durchlassspannung entsprechenden Spannung an dem Transistor durch den geladenen Kondensator. Der Tiefsetzsteller, bzw. Step-Down-Regler oder Abwärtswandler schaltet hierzu im Falle des Absinkens der Eingangsspannung auf oder unter die Vorwärtsspannung seinen Ausgang kontinuierlich ein. Somit kann genau in dem Zeitpunkt, in dem die verwendete Batterie oder der verwendete Akku so schwach ist, dass die gesetzliche Mindestleuchtstärke der Halbleiterlichtquelle (z.B. von 10 Lux) unterschritten wird, die Regelung durch des Tiefsetzstellers abgeschaltet und dieser für die Eingangsspannung durchlässig geschaltet werden, was zu einem vollständigen Aufladen des Kondensators führt.

Weiterhin wird die Spannung an der Basis des Transistors stets so niedrig gehalten, so dass der Transistor sperrt und die Signalquelle inaktiv ist, sofern die Eingangsspannung größer als die Vorwärtsspannung der Halbleiterlichtquelle ist. Dies erfolgt durch, ggfs. wiederkehrende Entladung des die Basis-Emitter-Spannung bereitstellenden Kondensators.

Durch diese Schaltungsanordnung ist gewährleistet, dass der Regler also genau dann aussetzt, wenn die Batterie- bzw. Akku-Spannung der Beleuchtungseinrichtung bis auf ca. Vorwärtsspannung der Halbleiterlichtquelle bzw. Leuchtdiode oder LED absinkt. Damit ist ein sehr kostengünstiges Verfahren zur Ermittlung des Niedrigspannungszustandes bereitgestellt.

Um eine echte Regelung bereitstellen zu können, hat es sich als bevorzugt gezeigt, wenn zwischen einer Kathode der Halbleiterlichtquelle und einem Feed-Back-Eingang des Abwärtswandlers eine Regelschleife vorgesehen ist. Durch diese Regelschleife ist gewährleistet, dass die Ausgangsspannung stets zumindest der Vorwärtsspannung der LED entspricht und die Eingangsspannung entsprechend herunter transformiert wird.

Es hat sich als sinnvoll erwiesen, wenn dem Kondensator zur Regulierung der an ihm anliegenden Spannung ein Widerstand in Reihe geschaltet ist. An diesem Widerstand fällt eine Spannung ab, so dass die - verbleibende - Spannung am Kondensator genutzt werden kann, um eine Spannung an der Basis des Transistors anzulegen, die ihn auf Durchlasskonfiguration schaltet. Anstelle eines Widerstandes kann auch ein Potentiometer eingesetzt werden. Dies bringt den Vorteil mit sich, dass durch das Potentiometer diejenige Leuchtstärke der Hauptleiterlichtquelle reguliert oder gewählt werden kann, bei der der Transistor geöffnet und die Signalquelle aktiviert werden soll.

Ein besonders einfacher Aufbau ist dadurch gekennzeichnet, dass die Signalquelle ebenfalls mit der Eingangsspannung gespeist ist. Hierdurch ist lediglich eine Batterie bzw. ein Akkumulator bei der Beleuchtungseinrichtung einzusetzen, die sowohl die Halbleiterlichtquelle als auch die Signalquelle betreiben kann.

Gemäß einer bevorzugten Ausführungsform ist die Signalquelle gebildet aus einem optischen Signalgeber, insbesondere aus einer zweiten Halbleiterlichtquelle. Dies hat sich als vorteilhaft erwiesen, sofern die Beleuchtungseinrichtung eine Fahrrad-Frontleuchte bzw. eine Taschenlampe betrifft, da die Blickrichtung des Benutzers im Wesentlichen auch auf die Beleuchtungseinrichtung gerichtet ist. Eine andere bevorzugte Ausführungsform der Signalquelle ist dadurch gekennzeichnet, dass diese aus einem akustischen Signalgeber, insbesondere einem Lautsprecher gebildet ist. Eine derartige Ausgestaltung ist beispielsweise für eine Fahrrad-Rückleuchte sinnvoll, da die Blickrichtung des Benutzers in der Regel nicht auf die Beleuchtungseinrichtung gerichtet ist. In diesem Falle wird der Benutzer der Beleuchtungseinrichtung über ein akustisches Signal über einen Niedrigspannungszustand informiert.

Um den Stromfluss in der Halbleiterlichtquelle nicht vollständig zu unterbrechen, hat es sich als bevorzugt erwiesen, wenn am Ausgang des Tiefsetzstellers eine Spule angeordnet ist, die mit der Halbleiterlichtquelle in Reihe geschaltet ist. Diese Spule ist dabei auch als eine Speicherdrossel einsetzbar.

Als besonders bevorzugt hat es sich erwiesen, wenn der Kondensator eine Zuführleitung mit einer gleichrichtenden Zuführdiode und eine Rückführleitung mit einer gleichrichtenden Rückführdiode aufweist. Die Zuführleitung und die Rückführleitung kommen jedoch auch ohne eine Diode aus. Die Zuführleitung ist dabei vorgesehen, um den Kondensator aufzuladen und um damit die an ihm anliegende Spannung zu erhöhen. Die Rückführleitung hingegen dient der Entladung des Kondensators, um die an ihm anliegende Spannung zu reduzieren.

In diesem Zusammenhang hat es sich daher als sinnvoll erwiesen, dass die Zuführleitung zwischen der Spule und der Anode der Halbleiterlichtquelle und dass die Rückführleitung am Ausgang des Tiefsetzstellers angeschlossen ist. Damit ist gewährleistet, dass sich einerseits der Kondensator nicht zu schnell auflädt beim Betreiben der Halbleiterlichtquelle und sich andererseits zügig entlädt beim Herabsetzen des Potentials am Ausgang des Tiefsetzstellers.

Die Zuführdiode sperrt im Entladefall des Kondensators die Zuführleitung, so dass die Entladung nicht über die Spule erfolgt. Die Rückführdiode sperrt im Falle des Aufladens des Kondensators die Rückführleitung, so dass die Aufladung des Kondensators erst nach Überwinden der Spule erfolgt.

Es hat sich weiterhin als besonders bevorzugt erwiesen, wenn der Halbleiterlichtquelle ein Glättungskondensator parallel geschaltet ist. Dieser Glättungskondensator dient einerseits zur Entstörung, bzw. zur Verbesserung der EM-Verträglichkeit des Tiefsetzstellers und andererseits zur Glättung des ausgangsseitigen Stroms. Hierbei weist der Kondensator bevorzugt eine relativ hohe Kapazität auf.

Die die Beleuchtungseinrichtung betreffende Aufgabe wird durch den Merkmalsbestand des Patentanspruchs 10 gelöst.

Die das Verfahren betreffende Aufgabe wird durch den Merkmalsbestand des Patentanspruchs 11 gelöst. Bevorzugte Ausführungsformen sind in dem von diesem abhängigen Ansprüchen genannt.

Das erfindungsgemäße Verfahren dient zur Signalisierung eines Niedrigspannungszustandes bei einer Beleuchtungseinrichtung mit einer Halbleiterlichtquelle, die bei Anlegen zumindest einer Vorwärtsspannung Licht emittiert. Dabei wird zunächst eine Eingangsspannung an einem Tiefsetzsteller bereitgestellt, dessen Ausgang mit einer Anode der Halbleiterlichtquelle verbunden ist. Durch einen Vergleich der Vorwärtsspannung der Halbleiterlichtquelle mit der Eingangsspannung mit Hilfe des Tiefsetzstellers wird ermittelt, ob die Vorwärtsspannung niedriger oder höher als die Eingangsspannung ist. Sofern die Eingangsspannung die Vorwärtsspannung überschreitet, wird eine Signalquelle blockiert durch zeitweises Herabsetzen eines Potentials an dem Ausgang des Tiefsetzstellers. Ist die Eingangsspannung auf oder unter die Vorwärtsspannung abgesunken, so wird die Signalquelle aktiviert. In diesem Falle ist der Tiefsetzsteller auf "Durchgang" geschaltet und an seinem Ausgang liegt dasselbe Potential wie an seinem Eingang an.

In bekannten, früheren Verfahren wurde die Batteriespannung geprüft, um zu ermitteln, ob diese ein die Vorwärtsspannung der Halbleiterlichtquelle unterschreitendes Level erreicht hat. Sofern dies der Fall ist, wurde eine zweite LED eingeschaltet. Das vorliegende Verfahren ist nunmehr jedoch unabhängig von der LED-Vorwärtsspannung, da der Regler automatisch genau dann aussetzt, wenn die Akkumulator- bzw. Batteriespannung bis auf ca. die Vorwärtsspannung der Halbleiterlichtquelle, bzw. der Haupt-LED abgesunken ist.

Im Folgenden wird die Erfindung an in der Zeichnung dargestellten Ausführungsbeispielen näher erläutert; es zeigen:
- Fig. 1: die erfindungsgemäße Schaltungsanordnung in einem Normalzustand (=Eingangsspannung größer als Vorwärtsspannung),
- Fig. 2: die Schaltungsanordnung im Niedrigspannungszustand (=Eingangsspannung kleiner gleich Vorwärtsspannung), und
- Fig. 3: eine weitere Ausführungsform der erfindungsgemäßen Schaltungsanordnung.

In den Figuren ist eine Schaltungsanordnung für eine Beleuchtungseinrichtung gezeigt. Diese Beleuchtungseinrichtung ist beispielsweise eine batterie- oder akkubetriebene Taschenlampe. Sie kann auch als eine batterie- oder akkubetriebene, insbesondere als eine vom Fahrzeug unabhängig mit Energie versorgte Fahrzeugleuchte, vorzugsweise als eine Front- oder Rückleuchte für ein Zweirad gebildet sein.

Die Beleuchtungseinrichtung umfasst mindestens eine Halbleiterlichtquelle 1, insbesondere eine oder mehrere Leuchtdioden bzw. LEDs. Die Halbleiterlichtquelle 1 ist anodenseitig mit dem Ausgang 3 eines Gleichspannungswandlers verbunden und wird von diesem mit elektrischer Energie versorgt. Bei Anlegen einer Vorwärtsspannung emittiert die Halbleiterlichtquelle 1 Licht. Die Halbleiterlichtquelle 1 bildet dabei den eigentlichen Scheinwerfer der Beleuchtungseinrichtung und emittiert im Normalzustand zumindest soviel Licht, um beispielsweise eine Straße ausreichend auszuleuchten und um den hierfür vorgesehenen gesetzlichen Bestimmungen zu genügen. Bevorzugt emittiert die Halbleiterlichtquelle 1 weißes Licht mit einem Lichtstrom in Bereichen zwischen 121 und 194 Lumen. Beispielsweise beträgt die Vorwärtsspannung der Hauptleiterlichtquelle 1 bei Raumtemperatur zwischen 2,8V und 3,25V, vorzugsweise 2,95V.

Der Gleichspannungswandler der vorliegenden Erfindung ist hierbei als ein Tiefsetzsteller 4 gebildet, der eine Eingangsspannung in eine Ausgangsspannung umwandelt. Die Ausgangsspannung wird dabei stets auf eine Spannung heruntertransformiert, die niedriger oder gleich der angelegten Eingangsspannung ist. Die Eingangsspannung für den Tiefsetzsteller 4 wird dabei vorzugsweise von einer elektrischen Versorgungseinrichtung 23, z.B. von einer Batterie oder einem Akkumulator, vorzugsweise von einem Lithium-Ionen-Akkumulator bereitgestellt. Andere Ausführungsformen benutzen Nickel-Cadmium-, Nickel-Metallhydrid- oder Lithium-Polymer-Akkumulatoren. Jedenfalls kann die Versorgungseinrichtung 23 hierzu innerhalb oder außerhalb eines Gehäuses der Beleuchtungseinrichtung angeordnet sein.

Die Eingangsspannung liegt an einem Eingang 24 des Tiefsetzstellers 4 an. Typischerweise kann der Tiefsetzsteller 4 der gezeigten Ausführungsform mit Eingangsspannungen zwischen 2,5V bis zu 6 Volt betrieben werden. In dem gezeigten Ausführungsbeispiel ist ein positives Potential am Eingang 24 angelegt und die Eingangsspannung ist definiert durch die Potentialdifferenz des angelegten Potentials der Batterie bzw. des Akkus gegenüber der Masse bzw. des Nullpotentials 25 (null Volt).

An einem Ausgang 3 des Tiefsetzstellers 4 liegt ebenfalls ein positives Potential an, so dass eine Spannung an der Halbleiterlichtquelle 1 anliegt, die im Wesentlichen der Vorwärtsspannung entspricht, d.h. der Spannung, bei der die LED Licht emittiert. Somit reduziert der Tiefsetzsteller 4 mit anderen Worten also die Eingangsspannung im Wesentlichen auf eine Ausgangsspannung herab, die zumindest in etwa der Vorwärtsspannung der Halbleiterlichtquelle 1 entspricht.

Hierfür bedient sich der Tiefsetzsteller 4 eines (nicht näher dargestellten) internen Schalterelements, das an seinem Ausgang 3 das Potential auf das Potential an einer Kathode 8 der LED herabsetzt, so dass zeitweise keine Spannung an der Hauptleiterlichquelle 1 anliegt. Hierzu verfügt der Tiefsetzsteller 4 der gezeigten Ausführungsform über einen Nullpotentialanschluss 27, der auf Nullpotential 25 gelegt ist. Das zwischen dem Potential am Eingang 24 und dem Nullpotential 25 des Nullpotentialanschlusses 27 umschaltende Schalterelement könnte z.B. ein Tiefsetzsteller-Transistor, insbesondere ein Feldeffekttransistor sein. Diese wird vorzugsweise mit einem Pulswellen modulierten (PWM) Signal im KHz-Bereich oder im unteren MHz-Bereich geschaltet. Gängige Schaltfrequenzen liegen zwischen 100 KHz und 1 MHz. Jedenfalls ist die Schaltfrequenz des im Tiefsetzsteller 4 angeordneten Schalterelements so hoch gewählt, dass die theoretisch vorliegenden dunkleren (oder gar ausgeschalteten) Phasen der Halbleiterlichtquelle 1 für das menschliche Auge nicht wahrnehmbar sind. Je nach Länge der dunkleren Phasen der Halbleiterlichtquelle 1 erscheint dem Beobachter die Lichtquelle 1 nur kontinuierlich mehr oder weniger hell leuchtend. Für die Regelung der Ausgangsspannung ist zwischen der Kathode 8 der Halbleiterlichtquelle 1 und einem Feedbackeingang 9 eine Regelschleife 10 vorgesehen. Die hierbei anliegende Feedbackspannung beträgt zwischen 0,095V und 0,105V, vorzugsweise 0,1V.

Parallel zur Halbleiterlichtquelle 1 ist ein als Spannungsspeicher 5 gebildeter Kondensator 15 geschaltet, der in den Einschaltphasen aufgeladen wird, sich aber schnell entlädt, wenn keine Potentialdifferenz (und damit keine Spannung) zwischen der Anode 2 und der Kathode 8 der Halbleiterlichtquelle 1 anliegt. Dieser Kondensator 15 stellt eine als Basis-Emitter-Spannung gebildete Schaltspannung an einem Schaltelement 6, vorliegend an der Basis 22 eines Transistors 16 bereit. Diese vom Kondensator 15 bereitgestellte Basis-Emitter-Spannung wird genutzt, um den Transistor 16 zu verstellen zwischen einer Durchlasskonfiguration, in der der Transistor 16 durchgängig geschaltet ist, und einer Sperrkonfiguration, in der der Transistor 16 gesperrt ist.

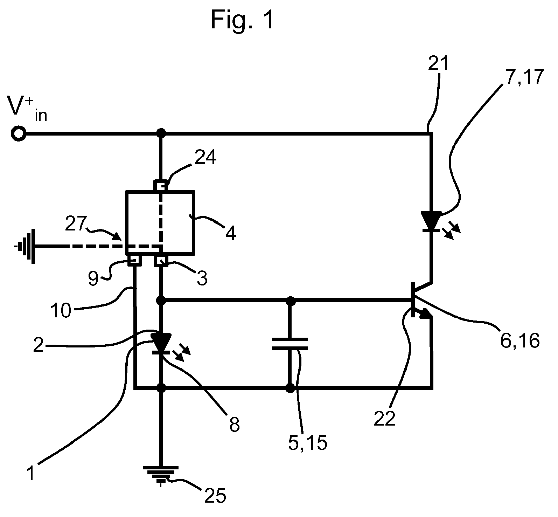

Im Fall einer die Vorwärtsspannung übersteigenden Eingangsspannung (Normalspannungszustand) wird der Kondensator 15 stets auf- und wieder entladen derart, dass dieser unterhalb einer Durchlassspannung gehalten ist. Wenn die Akku-Spannung am Eingang 24 des Tiefsetzstellers 1 die Vorwärtsspannung der Halbleiterlichtquelle 1 übersteigt, dann schaltet der Tiefsetzsteller 4 den Ausgang 3 zeitweise gegen Masse bzw. Nullpotential 25 (null Volt), derart, dass der Kondensator 15 stets unterhalb eines Spannungsniveaus gehalten ist, welches den Transistor 16 in der Sperrkonfiguration belässt. Dieses "Gegen-Masse-Schalten" ist in Figur 1 durch die gestrichelten Linien illustriert.

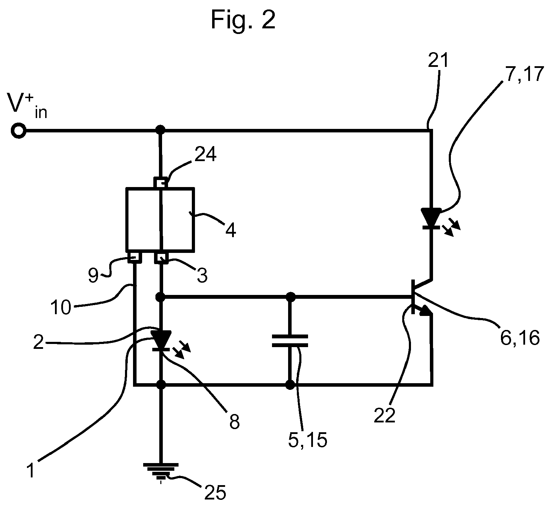

Sinkt allerdings die Akku- bzw. Batteriespannung am Eingang 24 des Tiefsetzstellers 4 auf oder unter ein Niveau ab, das der Vorwärtsspannung der Halbleiterlichtquelle 1 entspricht (Niedrigspannungszustand), so schaltet der Tiefsetzsteller 4 kontinuierlich ein, d.h. er besitzt an seinem Eingang 24 das gleiche Potential wie an seinem Ausgang 3. Dies ist durch die durchgezogene Linie in Figur 2 illustriert. In diesem Fall hat der Kondensator 15 keine Möglichkeit mehr sich zu entladen, wodurch er-je nach bereitgestellter Kapazität - eine Spannung aufbaut, die der Durchlassspannung entspricht und die den Transistor 16 aus der Sperrkonfiguration und die Durchlasskonfiguration überführt.

In der Durchlasskonfiguration kann Strom durch eine Signalquelle 7 in einem Signalkreislauf 21 fließen, die in den gezeigten Ausführungsbeispielen als eine zweite Halbleiterlichtquelle 17, insbesondere eine farbige (z.B. rote) LED gebildet ist und die dadurch zu leuchten beginnt. Sobald die Signalquelle 7 ein Signal ausgibt, d.h. sobald also die zweite LED leuchtet, ist der Benutzer der Beleuchtungseinrichtung informiert, dass die Batterie- bzw. Akkumulator-Spannung auf ein Niveau herabgesunken ist, welches zu einem baldigen Erlöschen der ersten, vorzugsweise weißen Halbleiterlichtquelle 1 führen wird. Mit anderen Worten wird dem Benutzer also durch die Signalquelle 7 signalisiert, wenn der Akkumulator oder die Batterie nahezu erschöpft ist und ein Erlöschen oder zumindest ein Abdunkeln des Scheinwerfers bzw. der Hauptlichtquelle 1 bevorsteht.

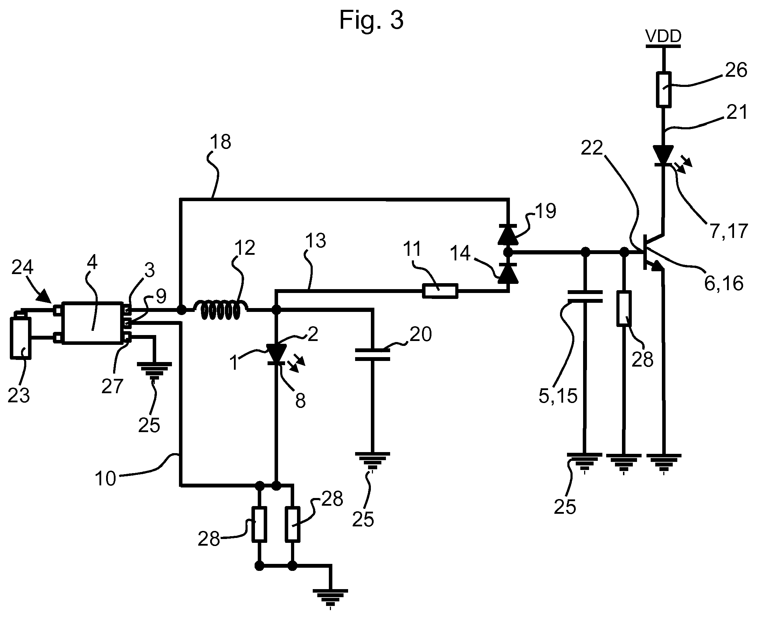

In der Ausführungsform nach Fig. 3 ist der Halbleiterlichtquelle 1 zur Glättung der an dieser anliegenden Spannung ein Glättungskondensator 20 parallel geschaltet, der vorzugsweise über eine große Kapazität verfügt. Typischerweise liegt die Kapazität dieses Glättungskondensators 20 im Bereich von ca. 10 µF. Zwischen dem Ausgang 3 des Tiefsetzstellers 4 und der Anode 2 der Halbleiterlichtquelle 1 ist hierbei eine Spule 12 in Reihe geschaltet. Durch diese Spule 12 ist gewährleistet, dass stets ein gewisser Stromfluss durch die LED bereitgestellt ist. Sie dient auch als Speicherdrossel. Typischerweise weist die Spule 12 eine Induktivität zwischen 0,18 und 12 µH auf. Kathodenseitig ist hier an der Halbleiterlichtquelle 1 ebenfalls die Regelschleife 10 vorgesehen, die mit dem Feedbackeingang 9 des Tiefsetzstellers 4 gekoppelt ist.

An der dem Ausgang 3 des Tiefsetzstellers 4 abgewandten Ende der Spule 12 ist ein Widerstand 11 mit dem Kondensator 15 in Reihe geschaltet, durch den die im Kondensator 15 aufzubauende Spannung reguliert werden kann.

Weiterhin wird durch diesen Widerspand 11 die Spannung im Kondensator 15 langsam aufgebaut. Anstelle dieses Widerstandes 11 ist es auch möglich, ein Potentiometer einzusetzen, durch das eine Variation des Spannungsabfalles in diesem Punkt ermöglicht wird. Weiterhin ist mit dem Kondensator 15 eine Zuführleitung 13 verbunden, an der sich der Widerstand 11 befindet. Ferner ist zwischen dem Widerstand 11 und dem Kondensator 15 eine gleichrichtende Zuführdiode 14 vorgesehen, die gewährleistet, dass über die Zuführleitung 13 keine Entladung des Kondensators 15 stattfindet.

An der dem Ausgang 3 des Tiefsetzstellers 4 zugewandten Ende der Spule 12 ist eine Rückführleitung 18 mit einer gleichrichtenden Rückführdiode 19 mit dem Kondensator 15 in Reihe geschaltet. Durch diese Rückführleitung 18 ist eine zügige Entladung des Kondensators 15 ermöglicht, wobei dabei insbesondere die Spule 12 überbrückt ist, um dort auftretende Effekte beim Entladevorgang auszuschließen. Sowohl die Zuführdiode 14 als auch die Rückführdiode 19 können als eine Schottky-Diode gebildet sein, die den hohen Schaltfrequenzen des Tiefsetzstellers 4 hinreichend standhalten können.

Vor der zweiten LED, d.h. vor der Signalquelle 7, ist in diesem Ausführungsbeispiel ein Vorwiderstand 26 geschaltet und diese LED kann entweder mit der Spannung des am Tiefsetzsteller 4 angelegten Akkumulators bzw. der Batterie oder aber mit einer weiteren, zweiten Spannungsquelle gespeist sein. Darüber hinaus sind weitere Ergänzungswiderstände 28 vorgesehen, die für eine Regulierung bzw. Glättung der Spannung innerhalb der Schaltungsanordnung sorgen.

Durch die erfindungsgemäßen Schaltungsanordnungen bzw. durch das erfindungsgemäße Verfahren ist sichergestellt, dass die Energieversorgung während des Betriebs der Beleuchtungseinrichtung in ausreichendem Maß vorliegt. Es wird also durch die vorliegende Erfindung ein plötzliches Erlöschen einer als Fahrradscheinwerfer gebildeten Beleuchtungseinrichtung vermieden.

### Bezugszeichenliste

- 1: Halbleiterlichtquelle
- 2: Anode
- 3: Ausgang
- 4: Tiefsetzsteller
- 5: Spannungsspeicher
- 6: Schaltelement
- 7: Signalquelle
- 8: Kathode
- 9: Feedbackeingang
- 10: Regelschleife
- 11: Widerstand
- 12: Spule
- 13: Zuführleitung
- 14: Zuführdiode
- 15: Kondensator
- 16: Transistor
- 17: zweite Halbleiterlichtquelle
- 18: Rückführleitung
- 19: Rückführdiode
- 20: Glättungskondensator
- 21: Signalkreislauf
- 22: Basis
- 23: Versorgungseinrichtung
- 24: Eingang
- 25: Nullpotential
- 26: Vorwiderstand
- 27: Nullpotentialanschluss
- 28: Ergänzungswiderstände

## Patentansprüche

1. Schaltungsanordnung für eine Beleuchtungseinrichtung mit einer Halbleiterlichtquelle (1), die bei Anlegen zumindest einer Vorwärtsspannung Licht emittiert und die eine Anode (2) aufweist, welche an einem Ausgang (3) eines Gleichspannungswandlers angeschlossen ist, durch den eine Eingangsspannung in eine Ausgangsspannung transformierbar ist, **dadurch gekennzeichnet, dass** der Gleichspannungswandler als ein Tiefsetzsteller (4) gebildet ist, dass der Halbleiterlichtquelle (1) ein Spannungsspeicher (5) parallel geschaltet ist zur Bereitstellung einer Schaltspannung an einem Schaltelement (6), welches verstellbar ist zwischen einer Durchlasskonfiguration, in der der Spannungsspeicher (5) eine Durchlassspannung an dem Schaltelement (6) bereitstellt wodurch eine Signalquelle (7) aktiviert ist, sowie einer Sperrkonfiguration, in der der Spannungsspeicher (5) keine oder eine die Durchlassspannung unterschreitende Spannung an dem Schaltelement (6) bereitsstellt wodurch die Signalquelle (7) inaktiv ist, und dass der Tiefsetzsteller (4) im Falle einer die Vorwärtsspannung übersteigenden Eingangsspannung ausgestaltet ist, das Potential an seinem Ausgang (3) zeitweise derart herabzusetzen, dass die Spannung des Spannungsspeichers (5) unterhalb der Durchlassspannung gehalten ist.

2. Schaltungsanordnung nach Anspruch 1, **dadurch gekennzeichnet, dass** der Spannungsspeicher (5) als ein Kondensator (15) gebildet ist zur Bereitstellung einer die Schaltspannung bildenden Basis-Emitter-Spannung an einem als Schaltelement (6) gebildeten Transistor (16).

3. Schaltungsanordnung nach Anspruch 2, **dadurch gekennzeichnet, dass** zwischen einer Kathode (8) der Halbleiterlichtquelle (1) und einem Feedbackeingang (9) des Tiefsetzstellers (4) eine Regelschleife (10) vorgesehen ist.

4. Schaltungsanordnung nach Anspruch 2 oder 3, **dadurch gekennzeichnet, dass** dem Kondensator (15) zur Regulierung der an ihm anliegenden Spannung ein Widerstand (11) in Reihe geschaltet ist.

5. Schaltungsanordnung nach einem der Ansprüche 1 bis 4, **dadurch gekennzeichnet, dass** die Signalquelle (7) mit der Eingangsspannung gespeist ist.

6. Schaltungsanordnung nach einem der Ansprüche 1 bis 5, **dadurch gekennzeichnet, dass** die Signalquelle (7) gebildet ist aus einem optischen Signalgeber, insbesondere aus einer zweiten Halbleiterlichtquelle (17) oder aus einem akustischen Signalgeber, insbesondere einem Lautsprecher.

7. Schaltungsanordnung nach einem der Ansprüche 1 bis 6, **dadurch gekennzeichnet, dass** der Tiefsetzsteller (4) an seinem Ausgang (3) eine Spule (12) aufweist, die mit der Halbleiterlichtquelle (1) in Reihe geschaltet ist.

8. Schaltungsanordnung nach Anspruch 7, **dadurch gekennzeichnet, dass** der Spannungsspeicher (5) eine Zuführleitung (13) mit einer gleichrichtenden Zuführdiode (14) und eine Rückführleitung (18) mit einer gleichrichtenden Rückführdiode (19) aufweist, dass die Zuführleitung (13) zwischen der Spule (12) und der Anode (2) angeschlossen ist, und dass die Rückführleitung (18) am Ausgang (3) des Tiefsetzstellers (4) angeschlossen ist.

9. Schaltungsanordnung nach einem der Ansprüche 1 bis 8, **dadurch gekennzeichnet, dass** der Halbleiterlichtquelle (1) ein Glättungskondensator (20) parallel geschaltet ist.

10. Beleuchtungseinrichtung mit einer Schaltungsanordung nach einem der Ansprüche 1 bis 9.

11. Verfahren zur Signalisierung eines Niedrigspannungszustandes bei einer Beleuchtungseinrichtung mit einer Halbleiterlichtquelle (1), die bei Anlegen zumindest einer Vorwärtsspannung Licht emittiert, wobei das Verfahren die folgenden Schritte umfasst:
- Bereitstellen einer Eingangsspannung an einem Tiefsetzsteller (4), dessen Ausgang (3) mit einer Anode (2) der Halbleiterlichtquelle (1) verbunden ist,
- Vergleichen der Vorwärtsspannung der Halbleiterlichtquelle (1) mit der Eingangsspannung des Tiefsetzstellers (4),
- Blockieren einer Signalquelle (7) durch zeitweises Herabsetzen eines Potentials an dem Ausgang (3) des Tiefsetzstellers (4), wenn die Eingangsspannung die Vorwärtsspannung überschreitet,
- Aktivieren der Signalquelle (7), wenn die Eingangsspannung auf oder unter die Vorwärtsspannung absinkt.

12. Verfahren nach Anspruch 11, **dadurch gekennzeichnet, dass** der Tiefsetzsteller (4) kontinuierlich eingeschaltet wird, wenn die Eingangsspannung auf oder unter die Vorwärtsspannung absinkt.

13. Verfahren nach Anspruch 11 oder 12, **dadurch gekennzeichnet**, der ersten Halbleiterlichtquelle (1) ein Kondensator (15) parallel geschaltet ist, der einen die Signalquelle (7) umfassenden Signalkreislauf (21) schaltet und der die Signalquelle (7) aktiviert, wenn die Spannung im Kondensator (15) eine vorgegebene Durchlassspannung erreicht.

14. Verfahren nach Anspruch 13, **dadurch gekennzeichnet, dass** der Kondensator (15) eine Spannung an einer Basis (22) eines Transistors (16) anlegt, dass die Spannung im Kondensator (15) unterhalb einer den Transistor (16) freigebenden Durchlassspannung gehalten wird, wenn die Eingangsspannung die Vorwärtsspannung überschreitet, dass die Spannung im Kondensator (15) auf oder über die Durchlassspannung angehoben wird, wenn die Eingangsspannung auf oder unter die Vorwärtsspannung absinkt, wodurch im Niedrigspannungszustand in dem Signalkreislauf (21) ein Strom fließt.

15. Verfahren nach Anspruch 14, **dadurch gekennzeichnet, dass** der Kondensator (15) beim Betreiben der Halbleiterlichtquelle (1) aufgeladen wird, dass der Ausgang (3) des Tiefsetzstellers (4) periodisch gegen Nullpotential (25) geschaltet wird, wenn die Eingangsspannung die Vorwärtsspannung übersteigt, derart, dass der Kondensator (15), insbesondere schnell entladen wird wodurch dieser an der Basis (22) des Transistors (16) eine unterhalb der Durchlassspannung liegendende Spannung anlegt, und dass beim Fallen der Eingangsspannung auf oder unter die Vorwärtsspannung der Tiefsetzsteller (4) kontinuierlich eingeschaltet wird zur Aufladung des Kondensators (15) derart, dass dieser an der Basis (22) des Transistors (16) zumindest die Durchlassspannung anlegt, wodurch die als zweite Halbleiterlichtquelle (17) gebildete Signalquelle (7) zu leuchten beginnt.
